(19) **Europäisches Patentamt / European Patent Office / Office européen des brevets**

(11) **EP 4 457 429 B1**

(12) **EUROPEAN PATENT SPECIFICATION**

(45) Date of publication and mention
of the grant of the patent:
**22.10.2025 Bulletin 2025/43**

(21) Application number: **22847169.4**

(22) Date of filing: **05.12.2022**

(51) International Patent Classification (IPC):
**E21C 35/06** *(2006.01)*      **E21C 27/02** *(2006.01)*

(52) Cooperative Patent Classification (CPC):
**E21C 35/06; E21C 27/02**

(86) International application number:
**PCT/US2022/051804**

(87) International publication number:
**WO 2023/129337 (06.07.2023 Gazette 2023/27)**

(54) **METHOD FOR CONTROLLING A SHEARER IN THREE DIMENSIONS AND SYSTEM**

VERFAHREN ZUR STEUERUNG EINES SCHERERS IN DREI DIMENSIONEN UND SYSTEM

PROCÉDÉ DE COMMANDE D'UNE HAVEUSE EN TROIS DIMENSIONS ET SYSTÈME

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **27.12.2021  GB 202119045**

(43) Date of publication of application:
**06.11.2024   Bulletin 2024/45**

(73) Proprietor: **Caterpillar Inc.**
**Peoria, IL 61629-6450 (US)**

(72) Inventors:
• **TEINER, Martin**
  **59075 Hamm (DE)**

• **SCHOENEWEISS, Nicolas**
  **44532 Lünen (DE)**
• **GAJETZKI, Markus**
  **45739 Oer-Erkenschwick (DE)**
• **BILSING, Rene**
  **83135 Schechen (DE)**

(74) Representative: **Novagraaf Group**
**Chemin de l'Echo 3**
**1213 Onex / Geneva (CH)**

(56) References cited:
**EP-B1- 1 276 969     AU-B1- 2016 200 785
US-A- 4 008 921**

## Description

Technical Field

The present invention pertains to a method for controlling a shearer in three dimensions, the shearer comprising at least one shearer drum attached to an arm having an adjustable arm height. The present invention also pertains to a system of a shearer comprising at least one shearer drum attached to a shearer arm having an adjustable arm height.

Technological Background

Shearers, or longwall shearers, are used to mine a coal panel out of an underground coal seam with typical coal panel dimensions in the range of about three to four kilometers in length, 250m to 400m in width and about 2.3 to 6m and above in height.

Mining the coal panel is achieved slice by slice by traversing a shearer along a cutting face and by incrementally moving the shearer through the panel after a cutting face is completely mined. Typically, a shearer travels with speeds of about 16m per minute along the cutting surface to be mined while mining out a depth of for example 100 centimeters with the shearer drum. The extracted coal can amount to a production capacity of several thousand tons per hour. The extracted coal is then usually loaded to a face conveyor, from where the coal is transported onto a crusher and a belt.

In most cases, the shearer comprises one leading shearer drum and a trailing shearing drum, whereas the trailing and leading roles can be interchanged depending on the direction in which the shearer is traveling.

To account for variations in cutting face height but also for coal seam inclinations, shearer drums are usually mounted to the shearer via height adjustable shearer arms.

Maximizing the coal yield therefore requires adjusting the shearer drums along each pan length and from slice to slice to consider the seam inclination and/or change in height.

Currently known control methods of shearers focus on following a predetermined line profile along a cutting face or on controlling the face advance angle from cutting face to cutting face. More advanced systems use geological and survey information to determine a cutting path in a cutting face or in the cutting face advance direction.

To this end, controllers are applied in the state of the art, controlling the shearer travelling along the cutting face. However, common controllers sometimes require additional corrective action and are not applicable to control the face advance tilt angle considering the seam inclination.

The method of controlling a longwall shearer and a system configured to carry out such method of the present disclosure solve one or more problems set forth above.

From AU 2016 200 785 B1 a mining machine including an extraction device and an at least 2D coordinate position determining device is known for generating a future path according to an intended cut profile. The mining machine includes sensors to collect characterizing data of the seam, said characterizing data forming part of the seam model and/or cut model.

Summary of the invention

Starting from the prior art, it is an objective to provide a method for increased control accuracy and for efficiently controlling a shearer allowing to maximize coal extraction from a seam.

This objective is solved by means a method for controlling a shearer in three dimensions with the features of claim 1 and a system configured to carry out such method according to claim 15. Preferred embodiments are set forth in the present specification, the Figures as well as the dependent claims.

Accordingly, a method for controlling a shearer in three dimensions is provided, the shearer comprising at least one shearer drum attached one arm having an adjustable arm height. The method comprises the steps of determining a current position of the shearer drum, calculating a target 3D cutting profile, and controlling the shearer by adjusting the arm height to the target 3D cutting profile using a PID controller. According to the invention, a control output is an arm height correction, calculated using an arm error in a face advance tilt angle error, wherein the PID controller is used to control the face advance tilt angle error.

Further, a system is provided, configured to carry out said method.

Brief Description of the Drawings

The present disclosure will be more readily appreciated by reference to the following detailed description when being considered in connection with the accompanying drawings in which:

> Figure 1 schematically illustrates a longwall mining shearer system in a perspective view according to an embodiment;
> Figure 2 schematically illustrates a longwall mining shearer system in a side view during operation in a coal seam;
> Figure 3 illustrates a method of controlling a shearer according to an embodiment;
> Figure 4 illustrates a flow chart of a method of controlling a shearer according to a development shown in Figure 3; and
> Figure 5 illustrates a flow chart of a method of controlling a shearer according to another embodiment.

Detailed Description of Preferred Embodiments

In the following, the invention will be explained in more detail with reference to the accompanying figures. In the Figures, like elements are denoted by identical reference numerals and repeated description thereof may be omitted in order to avoid redundancies.

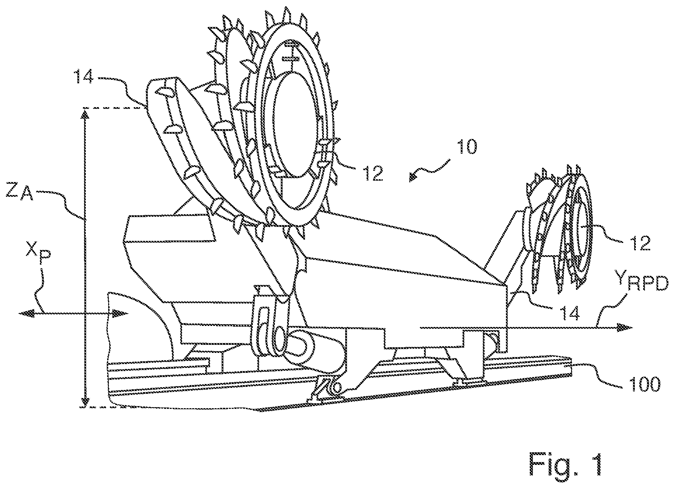

In Figure 1, a shearer system is shown in a perspective view. The shearer 10 comprises a first pivotable arm 14 with a shearer drum 12 and a second pivotable arm 14 with a shearer drum 12.

Travelling on a track 100, the shearer 10 pans from left to right or from right to left along a cutting face (not shown in Figure 1) along a panning axis $X_P$. Depending on the direction of travel on this panning axis $X_P$, one of the shearer drums 12 takes the role of the leading drum, whereas the other one of the shearer drums 12 the role of the trailing drum.

The shearer arm 14 may be configured to provide the shearer drum 12 between a ground level position and an elevated position at about 6m. The current shearer arm height is referenced as actual shearer arm height $Z_A$.

When operated applying the method for controlling the shearer in three dimensions according to the present disclosure, a current position of the shearer drum 12 is determined and a target 3D cutting profile is calculated. Further, the shearer 10 is controlled by adjusting the arm height Z to the target 3D cutting profile using a PID controller.

The target 3D cutting profile may comprise data points representing a 3D surface which may be used as reference surface for controlling the shearer 10. The target 3D cutting profile may comprise 3D profile data covering one or more slices of the coal panel to be mined in the coal seam.

Determining a current position of the shearer drum may comprise retrieving geometry data of the shearer drum, for example 3D geometry data. The shearer drums 12 may for example have a diameter of 2m and a depth of 1m and can be represented as a cylinder in the control method. Thereby, any movement of the cylinder along the tracks 100 and as a function of the arm height $Z_A$ can be retrieved as a 3D mining profile map, representing the contour of the remaining cavity.

Further, the calculated target 3D cutting profile may be considered a desired 3D profile and the 3D mining profile map obtained from the geometry data of the shearer drums may be considered the actual 3D profile.

By using a set of data points representing the 3D shape of the drum, the entire effect of the cutting sample can be shown, which is not possible if the shearer drum is represented by a single data point or by a sample of single points representing drum positions or by a sequence of data points resulting in trajectories representing the roof and floor profile.

Based on this principle, the 3D mining profile map, representing the extracted roof or floor profile, can be more accurate and even undercut or overcut structures can be defined clearly. Further, the 3D surfaces may be used to determine the desired shearer drum position with respect to a drum mode or operator input.

After mining of the cutting face is completed, the track 100 is moved forward in the direction of the retreat progress $Y_{RPD}$.

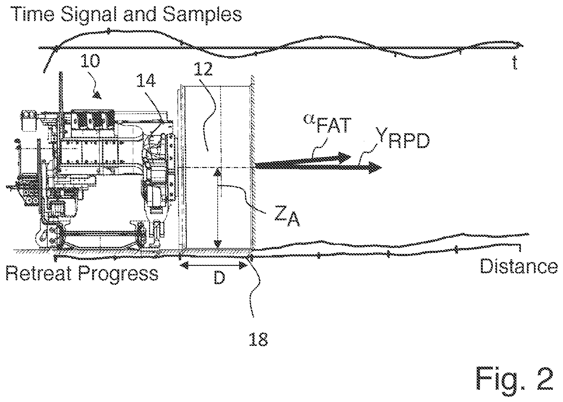

Figure 2 illustrates the longwall mining shearer 10 in a side view during operation. The shearer drum 12 is attached to the pivotable shearer arm 14 having an actual shearer arm height $Z_A$. When the shearer 10 mines a cutting face, it mines out a slice having a depth corresponding to the drum depth D. The target 3D cutting profile 18 may for example represent a floor profile of the current cutting slice. After a slice is completely mined, the shearer 10 is advanced forward into the retreat progress direction $Y_{RPD}$ and the shearer arm 14 is adjusted such that the subsequent slice is mined taking into account the face advance tilt angle $\alpha_{FAT}$. Thereby, exploiting the coal content of a coal panel can be maximized.

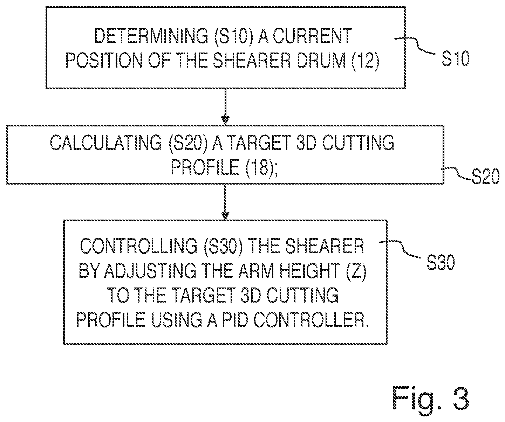

Figure 3 illustrates a method of controlling a shearer 10 according to an embodiment. A shearer suitable for the method of controlling a shearer 10 in three dimensions comprises at least one shearer drum 12 attached to an arm 14 having an adjustable arm height Z. The method comprises the steps of determining S10 a current position of the shearer drum 12, calculating S20 a target 3D cutting profile 18, and controlling S30 the shearer 10 by adjusting an arm height Z to the target 3D cutting profile using a PID controller.

In the sense of the present disclosure, the term target 3D cutting profile comprises data representing a 3D surface. By that the arm height adjustment can be controlled more efficiently.

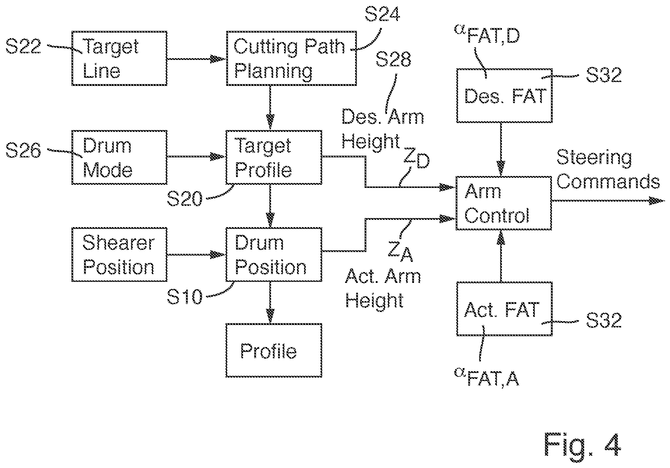

Figure 4 illustrates a flow chart of a method of controlling a shearer according to a development of the method shown in Figure 3. The steps and components of the flow chart shown in Figure 4 may be combined or isolated independently without being delimited to the combination shown in said illustration.

The flow chart shown in Figure 4 may be based on the embodiment shown in Figure 3. The step of determining S10 a current position of the shearer drum 12, or drum position, may have an actual arm height $Z_A$ as output. The actual shearer drum position may be determined from data like the shearer position given in 3D coordinates, the shearer arm height and/or the shearer geometry. Instead of a shearer arm height, a shearer arm angle may be utilized.

The step of calculating S20 a target 3D cutting profile may comprise a step of retrieving S22 a target line, which may comprise a roof target line and/or a floor target line. The roof target line and/or the floor target line may comprise floor, roof or pan line information. In general, target line information may be entered by an operator or taken from an external source such as a database, a sensor, or an application programming interface. Alternatively, target line information may be sourced from internal data only. The target line may be used to apply arm height corrections for the subsequent slice to adjust for target 3D cutting profile inaccuracies or changes in the seam.

A further enhancement may be the integration of a pan line into the target line. Rather than setting the floor profile and orientation, the position and/or orientation for each pan could be entered.

Further, the step of calculating S20 a target 3D cutting profile may comprise cutting path planning, which may comprise or consist of a step of calculating S24 a cutting path. The cutting path may comprise cutting path information regarding one or more slices. The cutting path may be determined based on current profiles, current conditions, geometrical restrictions, and optimization goals. The cutting path information may be fed into the target 3D cutting profile and may cause the controls to follow this desired path.

Additionally, or alternatively, the step of calculating S20 the target 3D cutting profile may comprise a step of retrieving S26 shearer drum specific operation information. Further, the step of calculating S20 the target 3D cutting profile may comprise a step of calculating S28 a desired arm height $Z_D$.

Further, the step of controlling S30 the shearer 10 may comprise a step of retrieving S32 a desired face advance tilt angle $\alpha_{FAT,D}$ and an actual face advance tilt angle $\alpha_{FAT,A}$.

In addition, the step of controlling S30 the shearer 10 may comprise a step of calculating (not shown in Figure 4) pan line estimations based on a 3D floor surface to predict the positions and orientations of the pans or tracks.

This information may also be used to determine the target 3D cutting profile. For example, the operator may create a target 3D cutting profile of specific positions and/or orientations that shall be reached by the shearer 10. The positions and orientations might refer to the shearer 10, to a conveyor or any other component.

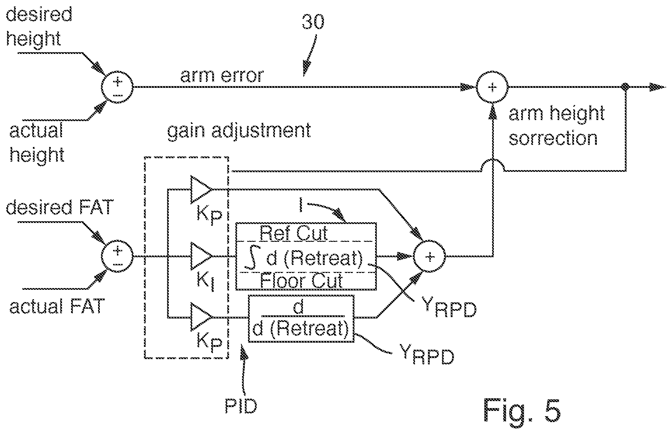

Figure 5 illustrates a flow chart of a method of controlling a shearer according to another embodiment. The embodiment shown in Figure 5 may be based on the embodiments shown in Figure 3 and Figure 4.

The difference of desired and actual arm height may determine the arm error which may be the key driver for the control method. In addition, the desired face advance tilt angle may be set and desired as well as the actual face advance tilt angle. Both may be input into the controls. The face advance tilt angle control output may be summed up with the arm height error and may result in a final arm height correction. This value may need to be converted into solenoid commands to drive the shearer arm and to apply the computed corrections.

According to the illustration shown in Figure 5, the PID controller may be dependent on the retreat progress direction $Y_{RPD}$ such as to minimize an error over the retreat progress direction $Y_{RPD}$. More specifically, the PID controller may be configured such that the integral term I may account for values of face advance tilt angle error and may integrate them over the retreat progress direction $Y_{RPD}$ to produce the integral term I. In other words, the PID controller uses the retreat information instead of the sampling time. This different treatment enables the integral and derivative controls along the face and results in significantly improved system behavior.

To this end, the PID control may have an integral component wherein the proportional control integrates over retreat such as

$$f = K_I \cdot \int \Delta\alpha \, d(retreat)$$

The derivative component of the PID control may be computed accordingly by

$$f = K_D \cdot \frac{d(\Delta\alpha)}{d(retreat)}$$

Further, the step of controlling S30 the shearer may comprise a feed forward command and an automated gain adjustment. The control output may be an arm height correction, calculated using an arm error and a face advance tilt angle error, wherein the PID controller may be used to control the face advance tilt angle error.

According to a further development, not shown in Figure 6, the step of controlling S30 the shearer may comprise an optimization algorithm, preferably wherein the optimization algorithm may comprise machine learning tools, in particular regression models, fuzzy logic and/or neuronal networks, preferably wherein the machine learning tools may comprise a pool of training data.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

A method for controlling a shearing three dimensions is provided, the shearer comprising at least one shearer drum attached one arm having an adjustable arm height and the method comprising the steps of determining a current position of the shearer drum, calculating a target 3D cutting profile, and controlling the shearer by adjusting the arm height to the target 3D cutting profile using a PID controller.

After completing cutting a cutting face, guiding tracks on which the shearer is running are displaced towards the subsequent cutting face, laying further ahead in the retreat direction.

Since the coal seam is usually inclined at a certain angle, the inclination must be considered when identifying the arm height of the shearer drum.

Due to sensor errors, geometrical tolerances, wear as well as environmental conditions and effects, the actual drum position may not match the desired drum position which results in inaccuracies in the floor or roof profile. These inaccuracies may eventually cause deviations to control references, like the face advance tilt angle for example, requiring corrective actions.

Calculating a target 3D cutting profile and controlling the shearer by adjusting the arm height to the target 3D cutting profile has the advantage that the any control of the shearer can be conducted under consideration of an entire coal panel to be mined, as deviations in one cutting face are not inherited to the subsequent cutting face. Thereby, the amount of coal extracted from the coal seam can be maximized. Further, potentially costly and time-consuming readjustments or recalculations of the shearer trajectories between individual cutting faces can be minimized or avoided.

According to a preferred development, the step of determining a current position of the shearer drum may comprise retrieving geometry data of the shearer drum, preferably 3D geometry data.

In the context of the present disclosure, a shearer drum may be a drum having a diameter of 2m and a depth of 1m. Current systems sample single points from drum positions and a sequence of data points resulting in trajectories which represent a roof or floor profile. However, this representation of a single data point does not show the entire effect of the shearer drum.

By retrieving geometry data of the shearer drum, preferably 3D geometry data, an extracted roof or floor profile can be more accurate and even undercut or overcut structures may be defined clearly. As an example, the floor may be retrieved as a 3D mesh that is updated by the drum position to represent an extracted floor profile. Likewise, the roof may be retrieved as a 3D mesh that is updated by the drum position to represent an extracted roof profile. Preferably, the shearer drum may be represented in a simplified way by a cylinder.

The 3D geometry data may be stored as coordinates. These 3D coordinates may for example be stored in a non-organized point cloud or in a specified grid. This has the advantage that the actual data points can be compared to the target 3D cutting profile. The retrieved 3D mesh surfaces may be used as a basis for determining desired drum position.

Preferably, a resulting profile map can be obtained on the basis of the shearer drum 3D geometry data, representing the mined profile map. This mined profile map may then be compared with the target 3D cutting profile, for example by overlapping the two maps. Thereby, a conclusion can be drawn in terms of whether the mining had been successful.

Preferably, the target 3D cutting profile and the mined profile map are stored in the same format together with information whether the target 3D cutting profile is a roof and/or a floor profile.

In a preferred development, the step of determining a current position of the shearer drum may have an actual arm height as output. Thereby, the control function of the shearer can be simplified to just one control value. By that, the software implementation of the method can be simplified which leads to reduced engineering and maintenance costs.

In a preferred embodiment, the step of calculating a target 3D cutting profile may comprise a step of retrieving a roof target line and/or a floor target line. Thereby, roof and/or floor target lines may be combined such that a 3D target cutting profile is obtained which may then be used in the control algorithm as a reference 3D map. The target lines may then be used to calculate arm height corrections for the subsequent cut to adjust for changes in the coal seam.

In a preferred development, the roof target line and/or the floor target line may comprise floor, roof or pan line information entered, preferably by an operator. Thereby, external floor, roof or pan line information may be entered for each or some cutting surface, allowing the creation of a target 3D cutting profile in the shape of a floor, roof or pan line.

According to an embodiment, the step of calculating a target 3D cutting profile may comprise a step of calculating a cutting path including a retreat progress direction.

Thereby, the profile extractions or a pan line trajectory may be determined. The cutting path may be based on current profiles, current conditions, geometrical restrictions, and optimization goals.

According to a preferred development, the step of calculating the target 3D cutting profile may comprise retrieving shearer drum specific operation information, such that the target 3D cutting profile may be obtained under consideration of repeating a predefined profile and/or repeating the last profile of cutting a fixed extraction height may be used. Thereby, the target 3D cutting profile may be obtained more efficiently.

In a preferred development, the step of controlling the shearer may comprise retrieving a desired face advance tilt angle and an actual face advance tilt angle. Thereby, the 3D topology of the target 3D cutting profile can be simplified to one control variable. This has the advantage that the control algorithm and calculation efforts can be simplified or reduced, respectively.

In a further development, the method may comprise a step of selecting a region to be mined in the retreat progress direction. Thereby, it is possible to determine profile heights and/or orientations in this selected region. The region may be selected graphically, for example in a 3D plot, a sequence of 2D plots or by entering vertices. Further, the profile may be adjusted in the selected window.

In a preferred embodiment, the PID controller may be dependent on the retreat progress direction such as to minimize the ever over retreat progress direction.

PID controller known in the state of the art are time dependent as they attempt to minimize the error over time by adjusting the arm height of the shearer when traveling along the cutting face. Inherently, such a PID controller is not applicable for controlling the face advance tilt angle. By implementing a PID controller dependent on the retreat progress direction such as to minimize the error over retreat progress direction, the shearer can be controlled to follow the seam inclination.

In a further development, the PID controller may be configured such that the integral term may account for values of face advance tilt error and may integrate them over the retreat progress direction to produce the integral term.

To this end, the PID control may have an integral component wherein the proportional control integrates over retreat such as

$$f = K_I \cdot \int \Delta\alpha \, d(retreat)$$

The derivative component of the PID control may be computed accordingly by

$$f = K_D \cdot \frac{d(\Delta\alpha)}{d(retreat)}$$

When the error is eliminated, the integral term will cease to grow. This will result in the proportional effect diminishing as the error decreases, but this is compensated for by the growing integral effect. Thereby, an accurate and optimal control can be achieved based on proportional, integral and derivative terms, minimizing the error between the actual and desired face advance tilt angle.

According to a further development, the step of controlling this shearer may comprise a feedforward command and an automated gain adjustment. By that, since the feed-forward output is not affected by the process feedback, it can never cause the control system to oscillate, thus improving the system response without affecting stability. Feedforward can be based on the setpoint and on extra measured disturbances. By implementing an automated gain adjustment, the control loop can be further adjusted for the desired control response.

According to the invention, a control output is an arm height correction, calculated using an arm error in a face advance tilt angle error, wherein the PID controller is used to control the face advance tilt angle error. By that, a responsive control of the shearer can be obtained along the entire target 3D cutting profile.

In a preferred development, a 3D profile mining map may be stored, representing the actual mined out profile and stored in the same data format as the target 3D cutting profile.

In a preferred development, the information stored in the target 3D cutting profile may depend on a drum mode and cutting path planning data. If a target line control feature is active, the target profile data may be overridden by the cutting path planning data. In case a drum mode is active, the drum position data may be used to update the target 3D profile map.

According to a preferred embodiment, the target 3D cutting profile may comprise the target face advance tilt angle. In this case, the target 3D cutting profile may comprise information of more than one slice to be mined out of the coal panel.

In a preferred embodiment, the actual drum position may determine the desired shearer arm height. This may be performed by intersecting the shearer drum position or the shearer geometry with the target 3D cutting profile. Alternatively, or additionally, an algorithm to optimize the system behavior may be used.

A preferred development, the step of controlling the shearer may comprise an optimization algorithm, preferably were in the optimization algorithm comprises machine learning tools, in particular regression models, fuzzy logic and/or neuronal networks, preferably were in the machine learning tools comprise a pool of training data. By that, the controller can be optimized further.

Industrial Applicability

With reference to the Figures, a method of controlling a shearer in three dimensions and a system for carrying out said method are applicable in any longwall shearer system.

In practice, a method of controlling a shearer in three dimensions and a system for carrying out said method may be implemented, manufactured, bought, or sold to retrofit a longwall mining shearer already deployed in the field in an aftermarket context, or alternatively may be implemented, manufactured, bought, sold or otherwise obtained in an OEM (original equipment manufacturer) context.

As alluded to previously herein, the aforementioned embodiments may increase the improve the reliability and performance as will be elaborated further herein momentarily.

Those skilled in the art will appreciate that various modifications might be made to the presently disclosed embodiments without departing from the scope of the present disclosure. Other aspects, features and advantages will be apparent upon an examination of the attached drawings and appended claims. As used herein, the articles "a" and "an" are intended to include one or more items and may be used interchangeably with "one or more." Where only one item is intended, the term "one" or similar language is used. Also, as used herein, the terms "has," "have," "having," "include", "includes", "including", or the like are intended to be open-ended terms. Further, the phrase "based on" is intended to mean "based, at least in part, on" unless explicitly stated otherwise. Further, coordinate axes are intended to be exemplary only without delimiting the scope of the disclosure.

All references to the disclosure or examples thereof are intended to reference the example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of values or dimensions herein are merely intended to serve as a shorthand method of referring individually to each separate value falling within the range, unless otherwise indicated herein, and each separate value is incorporated into the specification as if it were individually recited herein.

Furthermore, variations or modifications to certain aspects or features of various embodiments may be made to create further embodiments and features and aspects of various embodiments may be added to or substituted for other features or aspects of other embodiments to provide still further embodiments.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

**Claims**

1. A method for controlling a shearer in three dimensions, the shearer comprising at least one shearer drum (12) attached to an arm (14) having an adjustable arm height (Z), the method comprising the steps of

   determining (S10) a current position of the shearer drum (12);
   calculating (S20) a target 3D cutting profile (18); and
   controlling (S30) the shearer (10) by adjusting an arm height (Z) to the target 3D cutting profile using a PID controller
   **characterized in that**
   a control output is an arm height correction, calculated using an arm error and a face advance tilt angle error, wherein the PID controller is used to control the face advance tilt angle error.

2. The method of claim 1, wherein the step of determining (S10) a current position of the shearer drum (12) comprises a step of retrieving (S12) geometry data of the shearer drum (12), preferably 3D geometry data.

3. The method of claims 1 or 2, wherein the step of determining (S10) a current position of the shearer drum (12) has an actual arm height ($Z_A$) as output.

4. The method according to any of the previous claims, wherein the step of calculating (S20) a target 3D cutting profile comprises a step of retrieving (S22) a roof target line and/or a floor target line.

5. The method according to claim 4, wherein the roof target line and/or the floor target line comprise floor, roof or pan line information, preferably entered by an operator.

6. The method according to any of the previous claims, wherein the step of calculating (S20) a target 3D cutting profile comprises a step of calculating (S24) a cutting path including a retreat progress direction ($Y_{RPD}$).

7. The method according to any of claims 1-3, wherein the step of calculating (S20) the target 3D cutting profile comprises a step of retrieving (S26) shearer drum specific operation information, such that the target 3D cutting profile is calculated under consideration of repeating a predefined profile and/or repeating the last profile of cutting a fixed extraction height.

8. The method according to any of the previous claims, wherein the step of calculating (S20) the target 3D cutting profile comprises a step of calculating (S28) a desired arm height ($Z_D$).

9. The method according to any of the previous claims, wherein the step of controlling (S30) the shearer comprises retrieving a desired face advance tilt angle ($\alpha_{FAT,D}$) and an actual face advance tilt angle ($\alpha_{FAT,A}$).

10. The method according to any of the previous claims, wherein the PID controller is dependent on the retreat progress direction ($Y_{RPD}$) such as to minimize an error over the retreat progress direction ($Y_{RPD}$).

11. The method according to claim 10, wherein the PID controller is configured such that the integral term (I) accounts for values of face advance tilt angle error and integrates them over the retreat progress direction ($Y_{RPD}$) to produce the integral term (I).

12. The method according to any of the previous claims, wherein the step of controlling (S30) the shearer comprises a feed forward command and an automated gain adjustment.

13. The method according to any of the previous claims, wherein the step of controlling (S30) the shearer comprises an optimization algorithm, preferably wherein the optimization algorithm comprises machine learning tools, in particular regression models, fuzzy logic and/or neuronal networks, preferably wherein the machine learning tools comprise a pool of training data.

14. A system of a shearer comprising at least one shearer drum (12) attached to a shearer arm (14) having an adjustable arm height and a controlling device configured to carry out the method according to any of claims 1-13.

**Patentansprüche**

1. Verfahren zum Steuern einer Schrämmaschine in drei Dimensionen, die Schrämmaschine umfassend mindestens eine Schrämmaschinenwalze (12), die an einem Arm (14), der eine einstellbare Armhöhe (Z) aufweist, angebracht ist, das Verfahren umfassend die Schritte

Bestimmen (S10) einer aktuellen Position der Schrämmaschinenwalze (12);
Berechnen (S20) eines Ziel-3D-Schneidprofils (18); und
Steuern (S30) der Schrämmaschine (10) durch Einstellen einer Armhöhe (Z) auf das Ziel-3D-Schneidprofil unter Verwendung einer PID-Steuerung,
**dadurch gekennzeichnet, dass**
eine Steuerausgabe eine Armhöhenkorrektur ist, die unter Verwendung eines Armfehlers und eines Vortriebsneigungswinkelfehlers berechnet wird, wobei die PID-Steuerung verwendet wird, um den Vortriebsneigungswinkelfehler zu steuern.

2. Verfahren nach Anspruch 1, wobei der Schritt des Bestimmens (S10) einer aktuellen Position der Schrämmaschinenwalze (12) einen Schritt eines Abrufens (S12) von Geometriedaten der Schrämmaschinenwalze (12), vorzugsweise 3D-Geometriedaten, umfasst.

3. Verfahren nach Anspruch 1 oder 2, wobei der Schritt des Bestimmens (S10) einer aktuellen Position der Schrämmaschinenwalze (12) eine tatsächliche Armhöhe ($Z_A$) als Ausgabe aufweist.

4. Verfahren nach einem der vorstehenden Ansprüche, wobei der Schritt des Berechnens (S20) eines Ziel-3D-Schneidprofils einen Schritt des Abrufens (S22) einer Hangendziellinie und/oder einer Liegendziellinie umfasst.

5. Verfahren nach Anspruch 4, wobei die Hangendziellinie und/oder die Liegendziellinie Liegend-, Hangend- oder Pfannenlinieninformationen umfassen, die vorzugsweise durch einen Bediener eingegeben werden.

6. Verfahren nach einem der vorstehenden Ansprüche, wobei der Schritt des Berechnens (S20) eines Ziel-3D-Schneidprofils einen Schritt des Berechnens (S24) eines Schneidpfads, einschließlich einer Rückbaufortschrittsrichtung ($Y_{RPD}$), umfasst.

7. Verfahren nach einem der Ansprüche 1 bis 3, wobei der Schritt des Berechnens (S20) des Ziel-3D-Schneidprofils einen Schritt des Abrufens (S26) von schrämmaschinenwalzenspezifischen Betriebsinformationen derart umfasst, dass das Ziel-3D-Schneidprofil unter Berücksichtigung eines Wiederholens eines vordefinierten Profils und/oder des Wiederholens des letzten Profils zum Schneiden einer festen Extraktionshöhe berechnet wird.

8. Verfahren nach einem der vorstehenden Ansprüche, wobei der Schritt des Berechnens (S20) des Ziel-3D-Schneidprofils einen Schritt des Berechnens (S28) einer gewünschten Armhöhe ($Z_D$) umfasst.

9. Verfahren nach einem der vorstehenden Ansprüche, wobei der Schritt des Steuerns (S30) der Schrämmaschine das Abrufen eines gewünschten Vortriebsneigungswinkels ($\alpha_{FAT,D}$) und eines tatsächlichen Vortriebsneigungswinkels ($\alpha_{FAT,A}$) umfasst.

10. Verfahren nach einem der vorstehenden Ansprüche, wobei die PID-Steuerung von der Rückbaufortschrittsrichtung ($Y_{RPD}$) abhängig ist, um einen Fehler in der Rückbaufortschrittsrichtung ($Y_{RPD}$) zu minimieren.

11. Verfahren nach Anspruch 10, wobei die PID-Steuerung derart konfiguriert ist, dass der Integralterm (I) Werte des Vortriebsneigungswinkels berücksichtigt und diese in der Rückbaufortschrittsrichtung ($Y_{RPD}$) integriert, um den Integralterm (I) zu erzeugen.

12. Verfahren nach einem der vorstehenden Ansprüche, wobei der Schritt des Steuerns (S30) der Schrämmaschine einen Vorwärtskopplungsbefehl und eine automatische Verstärkungseinstellung umfasst.

13. Verfahren nach einem der vorstehenden Ansprüche, wobei der Schritt des Steuerns (S30) der Schrämmaschine einen Optimierungsalgorithmus umfasst, wobei der Optimierungsalgorithmus vorzugsweise Maschinenlernwerkzeuge, insbesondere Regressionsmodelle, Fuzzylogik und/oder neuronale Netzwerke, umfasst, wobei die Maschinenlernwerkzeuge vorzugsweise einen Pool von Trainingsdaten umfassen.

**14.** Schrämmaschinensystem, umfassend mindestens eine Schrämmaschinenwalze (12), die an einem Schrämmaschinenarm (14), der eine einstellbare Armhöhe aufweist, angebracht ist, und eine Steuervorrichtung, die konfiguriert ist, um das Verfahren nach einem der Ansprüche 1 bis 13 auszuführen.

**Revendications**

**1.** Procédé de contrôle d'une cisaille en trois dimensions, la cisaille comprenant au moins un tambour de cisaillement (12) fixé à un bras (14) ayant une hauteur de bras réglable (Z), le procédé comprenant les étapes consistant à

déterminer (S10) la position actuelle du tambour de cisaillement (12) ;
calculer (S20) un profil de coupe 3D cible (18) ; et
contrôler (S30) la cisaille (10) en réglant la hauteur du bras (Z)
au profil de coupe 3D cible à l'aide d'un contrôleur PID
**caractérisée en ce que**
une sortie de commande est une correction de la hauteur du bras, calculée à partir d'une erreur de bras et d'une erreur d'angle d'inclinaison de la face, dans lequel le contrôleur PID est utilisé pour contrôler l'erreur d'angle d'inclinaison de la face.

**2.** Procédé selon la revendication 1, dans lequel l'étape de détermination (S10) d'une position actuelle du tambour de cisaillement (12) comprend une étape de récupération (S12) des données géométriques du tambour de cisaillement (12), de préférence des données géométriques en 3D.

**3.** Procédé selon les revendications 1 ou 2, dans lequel l'étape de détermination (S10) d'une position actuelle du tambour de cisaillement (12) a une hauteur réelle de bras ($Z_A$) comme résultat.

**4.** Procédé selon l'une quelconque des revendications précédentes, dans lequel l'étape de calcul (S20) d'un profil de coupe 3D cible comprend une étape de récupération (S22) d'une ligne cible de toit et/ou d'une ligne cible de plancher.

**5.** Procédé selon la revendication 4, dans lequel la ligne cible du toit et/ou la ligne cible du sol comprennent des informations relatives au sol, au toit ou à la ligne panoramique, de préférence saisies par un opérateur.

**6.** Procédé selon l'une quelconque des revendications précédentes, dans lequel l'étape de calcul (S20) d'un profil de coupe 3D cible comprend une étape de calcul (S24) d'une trajectoire de coupe comportant une direction de progression du recul ($Y_{RPD}$).

**7.** Procédé selon l'une quelconque des revendications 1 à 3, dans lequel l'étape de calcul (S20) du profil de coupe 3D cible comprend une étape d'extraction (S26) d'informations sur le fonctionnement spécifique du tambour de cisaillement, de sorte que le profil de coupe 3D cible est calculé en tenant compte de la répétition d'un profil prédéfini et/ou de la répétition du dernier profil de coupe d'une hauteur d'extraction fixe.

**8.** Procédé selon l'une quelconque des revendications précédentes, dans lequel l'étape de calcul (S20) du profil de coupe 3D cible comprend une étape de calcul (S28) d'une hauteur de bras souhaitée ($Z_D$).

**9.** Procédé selon l'une quelconque des revendications précédentes, dans lequel l'étape de commande (S30) de la cisaille comprend la récupération d'un angle d'inclinaison d'avancement de la face souhaitée ($\alpha_{FAT,D}$) et d'un angle d'inclinaison d'avancement de la face réelle ($\alpha_{FAT,A}$).

**10.** Procédé selon l'une quelconque des revendications précédentes, dans lequel le contrôleur PID dépend de la direction de progression du recul ($Y_{RPD}$) de manière à minimiser une erreur sur la direction de progression du recul ($Y_{RPD}$).

**11.** Procédé selon la revendication 10, dans lequel le contrôleur PID est configuré de manière à ce que le terme intégral (1) tienne compte des valeurs de l'erreur d'angle d'inclinaison de l'avance frontale et les intègre sur la direction de progression du recul ($Y_{RPD}$) pour produire le terme intégral (I).

**12.** Procédé selon l'une quelconque des revendications précédentes, dans lequel l'étape de commande (S30) de la cisaille comprend une commande d'avance et un réglage automatisé du gain.

**13.** Procédé selon l'une quelconque des revendications précédentes, dans lequel l'étape de contrôle (S30) de la cisaille comprend un algorithme d'optimisation, de préférence dans lequel l'algorithme d'optimisation comprend des outils d'apprentissage automatique, en particulier des modèles de régression, une logique floue et/ou des réseaux neuronaux, de préférence dans lesquels les outils d'apprentissage automatique comprennent un ensemble de données d'entraînement.

**14.** Système de cisaillement comprenant au moins un tambour de cisaillement (12) fixé à un bras de cisaillement (14) ayant une hauteur de bras réglable et un dispositif de commande configuré pour mettre en œuvre le procédé selon l'une quelconque des revendications 1 à 13.

Fig. 1

Fig. 2

DETERMINING (S10) A CURRENT
POSITION OF THE SHEARER DRUM (12) — S10

CALCULATING (S20) A TARGET 3D CUTTING
PROFILE (18); — S20

CONTROLLING (S30) THE SHEARER
BY ADJUSTING THE ARM HEIGHT (Z)
TO THE TARGET 3D CUTTING
PROFILE USING A PID CONTROLLER. — S30

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2016200785 B1